# EUROPÄISCHE PATENTSCHRIFT

(11) **EP 2 907 564 B1**
(45) Veröffentlichungstag und Bekanntmachung des Hinweises auf die Patenterteilung: **18.09.2019**
(21) Anmeldenummer: 15000200.4
(22) Anmeldetag: 23.01.2015
(51) Int. Cl.: B01D 53/94, F01N 3/10, F01N 3/20, F01N 3/035, B01D 53/90

(54) **VERFAHREN ZUR REINIGUNG VON DIESELMOTORENABGASEN**
METHOD FOR CLEANING DIESEL ENGINE EXHAUST GASES
PROCÉDÉ DE NETTOYAGE DE GAZ D'ÉCHAPPEMENT DE MOTEURS DIESEL

(30) Priorität: 14.02.2014 DE 102014001880
(43) Veröffentlichungstag der Anmeldung: 19.08.2015
(73) Patentinhaber: DEUTZ Aktiengesellschaft, 51149 Köln (DE)
(72) Erfinder: Roos, Meike, 63654 Büdingen (DE); Klein, Ulf, 53804 Much (DE); Leyh, Gerald, 51149 Köln (DE)

(56) Entgegenhaltungen:
- EP-A2- 1 698 769
- WO-A1-2014/014399
- DE-A1- 4 432 577
- DE-A1-102005 059 581
- DE-A1-102006 049 591
- DE-A1-102007 042 836
- DE-A1-102010 039 972
- US-A1- 2005 031 514
- US-A1- 2010 077 739
- US-A1- 2011 083 621

## Beschreibung

Die Erfindung betrifft ein Verfahren zur Reinigung von Dieselmotorenabgasen.

Motoren der neuen Generation zeigen eine immer größere Leistungsausbeute pro Hubvolumen. Das bedingt, dass insbesondere bei der Applikation kleinerer Leistungsstufen immer kältere Abgastemperaturen auftreten, bei denen der sichere Betrieb eines "klassischen" Abgasnachbehandlungssystems mit motorfern angeordnetem SCR-Katalysator nicht mehr gewährleistet werden kann.

Insbesondere im Niedriglastbereich sind bei der Eindosierung untemperierter Harnstoffwasserlösung (HWL) ins Abgas Ablagerungen aus der Kristallisation von Harnstoff und Harnstoff-Folgeprodukten kaum zu vermeiden. Die entstehenden Ablagerungen können bei dauerhaftem Betrieb im unteren Teillastbereich zur Verblockung der Abgasanlage und somit zum Ausfall der Geräte führen. Auch kann eine hinreichende Entstickungsleistung des SCR-Systems im Niedriglastbereich nicht mehr gewährleistet werden, wenn die HWL im Abgas mangels hinreichender Abgastemperaturen nicht vollständig zu dem eigentlichen Reduktionsmittel Ammoniak aufgearbeitet werden kann.

Dies führt bei heutigen EAT-Systemen nach dem Stand der Technik, wie beispielsweise Systemen gemäß der EP-B-1 054 722 dazu, dass die SCR-Katalysatorvolumina zur Erreichung hinreichender Entstickungsraten vergrößert werden müssen. Dies ist jedoch mit dem zur Verfügung stehenden Bauraum in der Regel nicht zu vereinbaren.

Des Weiteren gilt für Motoren neuer Bauart ein Partikelanzahlgrenzwert. Diese Grenzwerte sind ohne Einführung eines geschlossenen Wandflussfilters nicht mehr zu erfüllen.

Die DE 103 48 800, offenbart ein Verfahren für die Steuerung eines Reduktantzuführsystems mit mindestens einem Heizelement. Das Zuführsystem ist stromauf mit einem SCR-Katalysator verbunden. Bei der luftunterstützten Einspritzung des Reduktants in das Zuführsystem wird über das beheizte Element eine verdampfte Mischung aus Luft und dem Reduktant gebildet, die in eine in den SCR-Katalysator eintretende Abgasmischung eingeleitet wird. Als Reduktant wird wässrige Harnstofflösung verwendet. Das gesamte Zuführsystem einschließlich Mischeinheit für HWL und Luft und Heizelement / Verdampfereinheit ist abströmseitig zum SCR-Katalysator in das Abgas führende Rohr abströmseitig zum Motoraustritt integriert. Die zur Verdampfung des HWL-Luft-Gemisches notwendige Wärmemenge wird elektrisch unter Zuhilfenahme des 12-V-Batteriestroms erzeugt.

Die DE 10 2007 029 674 offenbart eine Baugruppe zur Stickoxidminderung in einer sauerstoffhaltigen Gasströmung, insbesondere einer Abgasanlage einer Verbrennungskraftmaschine, mit einem in einer Stickoxide und Sauerstoff führenden Gasleitung angeordneten SCR-Katalysator, einem Umsetzungsreaktor, der eine eine Ammoniakvorstufe enthaltende Lösung in eine Ammoniaklösung umsetzt, und einer dem Umsetzungsreaktor nachgeschalteten, als separates Bauteil ausgebildeten Verdampfungseinheit, in der die Ammoniaklösung vor Einbringung in die Gasleitung stromaufwärts des SCR-Katalysators verdampft wird. Die Umsetzung der eine Ammoniakvorstufe enthaltenden Lösung (bevorzugt Harnstoffwasserlösung) in eine Ammoniaklösung erfolgt erfindungsgemäß unter Verwendung von Mikrowellen. Vor der als separates Bauteil ausgeführten Verdampfungseinheit für Ammoniaklösung kann ein Wärmetauscher zur Erwärmung der Ammoniaklösung vorgeschaltet sein, um die zur Verdampfung notwendige Energie zu verringern, indem beispielsweise die Wärme der Abgasrückführleitung genutzt wird. Bei dem Verdampfer selbst handelt es sich um ein elektrisch betriebenes Heizelement.

Die DE 10 2007 042 836 offenbart eine Vorrichtung zur Abgasnachbehandlung eines Kraftfahrzeuges mittels einer Ammoniak freisetzenden Flüssigkeit, beispielsweise Harnstoffwasserlösung, umfassend einen Vorratsbehälter zur Speicherung der Flüssigkeit, wobei eine Temperiervorrichtung zum Temperieren der Flüssigkeit vorgesehen ist. Die Temperiervorrichtung ist zur Kühlung der Flüssigkeit einem Kühlkreislauf des Kraftfahrzeuges zugeordnet. Dabei kann es sich um den Kühlkreislauf des Verbrennungsmotors oder um einen Klimaanlagenkreislauf handeln. Die Temperiervorrichtung ist als separates Bauteil ausgeführt. Mittels Temperiervorrichtung kann die Flüssigkeit erwärmt und ihr Einfrieren verhindert werden oder die Flüssigkeit auf ein vorteilhaftes Temperaturniveau erwärmt werden, bei dem sich eine besonders gute Abgasreinigung ergibt.

Die DE 10 2009 009 538 offenbart ein System zum Temperieren eines fluiden Additivs für ein Abgassystem eines Verbrennungsmotors, vorzugsweise Harnstoffwasserlösung, das gekennzeichnet ist durch Mittel für einen Wärmeaustausch zwischen dem Additiv und einem Kältemittelkreislauf einer Kältemittelanlage, insbesondere einer Klimaanlage.

Der in der DE 10 2007 011 184 beschriebenen Entwicklung liegt die Aufgabe zugrunde, den Emissionsgehalt von Verbrennungsmotoren, insbesondere Dieselmotoren, weiter zu senken und den Bauraum, der zur Behandlung des Abgases notwendig ist, zu minimieren. Zur Lösung dieser Aufgabe wird ein Wärmetauscher zur Kühlung von Abgas eines Verbrennungsmotors eines Kraftfahrzeugs zur Rückführung von Abgas zum Verbrennungsmotor offenbart. Dieser Wärmetauscher weist zumindest einen ersten Strömungskanal zur Durchströmung mit zumindest einem ersten Fluid zur Kühlung und zumindest einen zweiten Strömungskanal zur Durchströmung mit einem zweiten zu kühlenden Fluid auf, sowie ein Gehäuse zur Aufnahme des zumindest einen ersten Strömungskanals und des zumindest einen zweiten Strömungskanals. Das Gehäuse weist zumindest einen Einströmabschnitt zur Einströmung des zweiten Fluids in den Wärmetauscher und zumindest einen Abströmabschnitt zum Ausströmen des zweiten Fluids aus dem Wärmetauscher auf. Der Wärmetauscher ist durch zumindest eine Vorrichtung zur Überführung einer flüssigen Harnstofflösung in zumindest Ammoniakgas gekennzeichnet.

Die WO 2012/022687 offenbart ein Verfahren zum Betrieb einer Abgasnachbehandlungsvorrichtung mit zumindest einem Speicher für ein Reduktionsmittel und zumindest einer Zuführungseinrichtung für ein Reduktionsmittel, wobei das Verfahren zumindest die folgenden Schritte umfasst: a) Prüfen eines Füllstands des zumindest einen Speichers; b) Prüfen des aktuellen Abgasmassenstroms; c) Zuführen von Reduktionsmittel, wenn der Füllstand des zumindest einen Speichers unterhalb eines Füllstandsminimums liegt und der Abgasmassenstrom in einem Niedriglastbereich liegt. In einer besonderen Ausführungsform wird in Schritt c) zumindest eine der folgenden Aktionen durchgeführt: Heizen zumindest des Abgasmassenstroms oder des Reduktionsmittels und Zuführen von Reduktionsmittel. Dabei kann die Wärmezufuhr hin zum Reduktionsmittel durch externe elektrische Heizer gewährleistet bzw. verbessert werden.

Die DE 10 2009 025 135 offenbart eine Vorrichtung zur Verdampfung einer Harnstoffwasserlösung, aufweisend einen Förderkanal für die Harnstoffwasserlösung, der sich durch zumindest eine erste Zone und eine zweite Zone zur Einbringung von Wärmeenergie hindurch erstreckt, wobei die zwei Zonen getrennt voneinander beheizbar sind, und der Förderkanal in der zweiten Zone zunächst in einem zweiten Eintrittsbereich einen mäanderförmigen Verlauf und danach einen geradlinigen Verlauf ausweist. In der ersten Zone wird die Harnstoffwasserlösung auf eine Temperatur im Bereich von 100°C bis 180°C vorgewärmt, in der zweiten Zone bei einer Temperatur von 420°C bis 490°C verdampft.

Die DE 10 2008 012 087 offenbart eine Verdampfungseinheit zur Erzeugung eines Ammoniak umfassenden Gasstroms aus Harnstoffwasserlösung, die ebenfalls als separates Bauteil ausgeführt wird.

Industriemotoren nach dem Stand der Technik werden typischerweise mit katalytisch wirksamen Abgasnachbehandlungs(ANB)-Systemen gemäß der oben genannten EP-B-1 054 722 - oder auch "SCRT®-Systeme" genannt, bestehend aus DOC/(c)DPF + SCR/ASC mit Eindosierung von Harnstoffwasserlösung (HWL) vor dem SCR/ASC-Katalysator - betrieben, um die geltenden Emissionsvorschriften (Tier4 final / EU Stufe IV und nachfolgende) einzuhalten.

Damit das ANB-System mit der geforderten Reinigungseffizienz arbeiten kann, sind Mindestabgastemperaturen und Katalysatorbetriebstemperaturen von 230°C und mehr erforderlich.

In niedriglastigen Betriebszuständen können die geforderten Mindestabgastemperaturen nur mittels motorischen Wärmemaßnahmen (z. B. Androsselung des Motors) bereitgestellt werden. Die Energie, die zur Bereitstellung der notwendigen Abgastemperaturen in das Abgas eingetragen wird, ist für den Antriebsstrang verloren. Verminderte Antriebswirkungsgrade des Motors und erhöhte Kraftstoffverbräuche und somit auch erhöhte CO₂-Emissionen sind die Folge.

Einen besonders großen negativen Einfluss auf den Kraftstoffverbrauch hat die Regeneration des geschlossenen Dieselpartikelfilters. Zum kontrollierten Abbrand des im Filter eingelagerten Rußes sind Abgastemperaturen von rd. 600°C erforderlich. Um diese zu erreichen sind i.d.R. zusätzlich zur passiven Regeneration aktive Maßnahmen wie beispielsweise eine zusätzliche Kraftstoffnacheinspritzung und exotherme Umsetzung der resultierenden unverbrannten Kohlenwasserstoffe auf dem DOC oder aktive Regenerationsmaßnahmen beispielsweise mittels Kraftstoff betriebenem Brenner gemäß EP-A-2 177 728, EP-A-2 192 279 bzw. WO 2010/139429 notwendig.

Zum Betrieb des SCR-Systems wird als Reduktionsmittel typischerweise wird eine Harnstoffwasserlösung, die 32,5 % Harnstoff enthält, eingesetzt.

Um daraus Ammoniak freizusetzen muss also zunächst 67,5 % Wasser verdampft und der Harnstoff hydrolytisch zu Ammoniak und CO₂ zersetzt werden.

Bei heutigen SCR-Systemen wird die zur Erzeugung des Reduktionsmittels Ammoniak benötigte wässrige Harnstofflösung (Harnstoff-Wasser-Lösung HWL, Handelsname AdBlue®) in flüssigem, untemperiertem Zustand anströmseitig zum SCR-Katalysator in das Abgas eingespritzt. Die Wärmemenge, die benötigt wird, um die HWL vollständig und unter (quantitativer) Freisetzung von Ammoniak in die Gasphase zu überführen (= Harnstoffaufbereitung), muss vollständig durch das heiße Abgas bereitgestellt werden.

US2005/0031514 offenbart ein System zu Verminderung von Stickoxiden und Partikelemissionen von Dieselmotoren.

DE102005059581 offenbart eine Vorrichtung zum Beheizen eines Tanks für Harnstoffwasserlösung eines Kraftfahrzeugs.

Insbesondere in schwachlastigen Betriebspunkten ist die im Abgas vorhandene Wärmemenge jedoch häufig nicht ausreichend, um die eingespritzte Harnstoff-Wasser-Lösung (HWL), die zur vollständigen Reduktion der ebenfalls im Abgas vorhandenen Stickoxide benötigt wird, vollständig aufzubereiten. Die Folge sind Ablagerungen von Harnstoff und Harnstoff-Folgeprodukten wie Isocyansäure, Cyanursäure und Melamin in der Abgasanlage (Kristallisation), die zur gegebenenfalls vollständigen Verblockung der Abgasanlage führen können, sowie Umsatzeinbußen in der SCR-Reaktion wegen der unvollständigen Bereitstellung der zur Stickoxidreduktion benötigten stöchiometrischen Menge an Ammoniak.

Es ist Aufgabe der vorliegenden Erfindung, ein Verfahren zur Reinigung von Dieselmotorenabgasen bereit zu stellen, das die vorstehend beschriebenen Nachteile heutiger Verfahren insbesondere bei Betrieb der Brennkraftmaschine im Niedriglastbereich nicht aufweist und sich durch eine verbesserte Energieeffizienz bei zugleich höchstmöglicher Kosteneffizienz des Gesamtsystems aufweist.

Diese Aufgabe wird durch ein Verfahren zur Reinigung von Dieselmotorenabgasen mit den folgenden Verfahrensschritten gelöst:
Durchleiten des zu reinigenden Abgases durch einen Dieseloxidationskatalysator (DOC) zur Oxidation von gasförmigen Restkohlenwasserstoffen (HC) und von Kohlenstoffmonoxid (CO) zu Kohlenstoffdioxid (CO₂) und zur mindestens anteiligen Oxidation von im Abgas enthaltenen Stickstoffmonoxid (NO) zu Stickstoffdioxid (NO₂);
Zugabe von am Motor vorkonditionierten, d. h. auf 80 - 90 °C erwärmten Harnstoffwasserlösung (HWL) zum aus Schritt a.) resultierenden Abgas und Freisetzung von Ammoniak aus dem zugegebenen Harnstoff durch Thermolyse und Hydrolyse;
Durchleiten des aus Schritt b.) resultierenden Abgases durch ein SCR-katalytisch aktiviertes Partikelfilter (SDPF) zur Verminderung der im Abgas enthaltenen Partikel und der im Abgas enthaltenen Stickoxide;
Durchleiten des aus Schritt c.) resultierenden Abgases durch einen selektiven Ammoniakoxidationskatalysator (ASC) zur Verminderung von Ammoniakrestgehalten,
wobei sich die HWL in einem im Bereich der Brennkraftmaschine angeordneten HWL-Tank (3) befindet und sich durch einen Wärmetauscher (14) erwärmt der in das Kurbelgehäuse oder in den Zylinderkopf der Brennkraftmaschine integriert ist, und wobei die HWL mittels Flüssigförderpumpe (12) in den Bereich des Kühlwasser führenden Bereichs des Kurbelgehäuses bzw. des Zylinderkopfes gefördert und durch den Wärmetauscher (14) erwärmt wird.

Bevorzugt erfolgt die Vorkonditionierung von Harnstoffwasserlösung am Motor mittels der in DE 10 2014 001 879.2 offenbarten Vorrichtung.

Die Eindosierung von konditionierter, d. h. auf eine Temperatur von 80 - 90°C vorgewärmter Harnstoffwasserlösung (HWL) in den Abgasstrang ermöglicht zum einen die Dosierung bei niedrigeren Abgastemperaturen (180 - 200°C) als bei herkömmlichen Eindosierungsverfahren (200 - 230°C). Da zur Aufarbeitung der HWL zu Ammoniak weniger thermische Energie eingetragen werden muss, als bei herkömmlichen Systemen, kann dieser Vorteil statt zur Absenkung der Dosierschwelltemperatur zum anderen zur Verkürzung der Mischstrecke vor SDPF bzw. vor SCR-Katalysator genutzt werden.

Das am Motor nach Turbine abströmseitig angeordnete Abgasnachbehandlungssystem umfasst einen DOC, eine Vorrichtung zur HWL-Eindosierung, ein SCR-katalytisch aktiviertes Partikelfilter (SDPF) und einen Ammoniakoxidationskatalysator, sowie optional einen SDPF und Ammoniakoxidationskatalysator (auch: Ammoniakschlupfkatalysator ASC) angeordneten zweiten SCR-Katalysator.

Durch die (Teil-)Integration von SCR-Katalysatorvolumen in das Partikelfilter ist eine Verkleinerung des ANB-Systems im Vergleich zu herkömmlichen Systemen möglich. Eine verbesserte Aufheizcharakteristik des ANB-Systems nach dem Kaltstart und deutlich geringere Wärmeverluste über die Abgasanlage sind die Folge. Zudem ergeben sich Bauraumvorteile. Der SCR-Katalysator, der in Strömungsrichtung des Abgases nach dem Partikelfilter angeordnet ist, kommt wahlweise zum Einsatz und zwar dann, wenn das in das Partikelfilter integrierbare SCR-Volumen nicht ausreichend ist, um eine NOx-Konvertierung des Gesamtsystems über die Laufzeit (8000 Betriebsstunden) von größer als 97 % zu gewährleisten.

Besonders bevorzugt umfasst das erfindungsgemäße Verfahren ein passives Regenerationskonzept für das SCR-katalytisch aktivierte Partikelfilter (SDPF), das nachstehend noch beschrieben ist. Eine zusätzliche Stillstandsregeneration des Partikelfilters erfolgt im Rahmen des Service, ebenso die Überwachung des Abgasgegendruckes über SDPF, um im Falle unzureichender Rußregenerationsraten außerhalb der Service-Intervalle sogenannte Not-Stillstandsregenerationen durchführen zu können.

Das SCR-katalytisch aktivierte Partikelfilter (SDPF) wird in besonders bevorzugten Ausgestaltungen des erfindungsgemäßen Verfahrens mit einem passiven Filterregenerationskonzept betrieben. Dieses beinhaltet den Abbrand von eingelagertem Ruß nach der sogenannten CRT® -Reaktion, bei der die Oxidation der eingelagerten Rußpartikel mit NO₂ erfolgt, das im ersten Schritt des erfindungsgemäßen Verfahrens über dem anströmseitig zum SDPF angeordneten DOC erzeugt wird.

| | | |
|---|---|---|
| CRT®-Reaktion: | Cₙ + 2n NO₂ | n CO₂ + 2n NO |

Diese CRT®-Reaktion steht in Konkurrenz zur SCR-Reaktion. Für die SCR-Reaktion gibt es drei Reaktionsmechanismen, die mit unterschiedlichen Reaktionsgeschwindigkeiten (RG) ablaufen:

| | | | |
|---|---|---|---|
| Standard SCR: | 4 NO + 4 NH₃ + O₂ | 4 N₂ + 6 H₂O | mittlere RG |
| fast SCR: | NO + NO₂ + 2 NH₃ | 2 N₂ + 3 H₂O | hohe RG |
| slow SCR: | 6 NO₂ + 8 NH₃ | 2 N₂ + 12 H₂O | niedrige RG |

Um für den Rußabbrand zur passiven Regeneration des Partikelfilters hinreichend viel NO₂ zur Verfügung zu stellen, muss der vorgelagerte DOC in Betriebspunkten bis zu einer Abgastemperatur von 350 - 375°C mehr als 50 % NO₂ im NOₓ zur Verfügung stellen. Der NO₂-Überschuss steht für den Rußabbrand zur Verfügung, wenn die "CRT®-Reaktion" schneller abläuft, als die "slow-SCR"-Reaktion, so dass eine passive Partikelfilterregeneration gewährleistet ist.

Bei einer DOC-Betriebstemperatur oberhalb von ca. 300°C verlässt man den kinetisch kontrollierten Bereich. Die mittels Katalysator erzeugbare NO₂-Konzentration im Abgas hängt dann nicht mehr allein von der Katalysatorleistung, sondern von der Lage des thermodynamischen Gleichgewichts ab. Bei Temperaturen von mehr als 400°C sind NO₂-Konzentrationen von mehr als 50 % im NOₓ nicht mehr erzeugbar.

Bereits ab 250°C setzt die Rußoxidation mit NO₂ ein. Ab 300°C ist eine passive Regeneration des Partikelfilters mit hoher Betriebssicherheit möglich (Quelle: C. Hagelüken et al, "Autoabgaskatalysatoren, 2. Aufl., expert Verlag 2005, S. 102). Unter diesen Randbedingungen ist, bei Bereitstellung hinreichend hoher NO₂-Konzentrationen, die Konkurrenz zwischen SCR-Reaktion und "CRT®-Reaktion" handhabbar.

Sollte die durch den DOC bereitstellbare Menge an NO₂ nicht ausreichend sein, um die Konkurrenzsituation zwischen SCR-Reaktion einerseits und Rußregeneration andererseits produktiv aufzulösen, besteht die Möglichkeit, die Entstickungseffizienz des SCR-katalytisch aktivierten Filters durch Begrenzung der einzudosierenden Reduktionsmittelmenge zu limitieren, um eine hinreichende passive Regeneration des Partikelfilters zu gewährleisten. Für diesen Fall ist in einer alternativen Ausgestaltung eine zweite Dosierstelle für Harnstoffwasserlösung (HWL) vor einem nachgelagerten (zusätzlichen) SCR-Katalysator vorgesehen. Mittels dieser zweiten Dosierstelle wird vorkonditionierte, d. h. auf 80 - 90°C erwärmte Harnstoffwasserlösung (HWL) dem aus Schritt c.) resultierenden Abgas zugeführt, um die geforderte Entstickungseffizienz des Gesamtsystems von > 97 % zu gewährleisten.

Eine weitere vorteilhafte, nicht erfindungsgemässe Ausgestaltung sieht einen Industriemotor mit einem ANB-System aus DOC + SDPF + SCR/ASC vor, wobei statt einer Vorrichtung zur Eindosierung von Harnstoffwasserlösung in das zu reinigende Abgas eine Vorrichtung zur Eindosierung von gasförmigem Ammoniak zum Einsatz kommt. Die Aufbereitung des Harnstoffs zu Ammoniak erfolgt bei einer solchen Ausgestaltung in einem am Motor angebrachten Reaktor, dem Harnstoffwasserlösung als Edukt zugeführt wird und in dem in einem katalytischen Verfahren per Thermolyse des Harnstoffs zu Isocyansäure und Ammoniak und anschließender Hydrolyse der resultierenden Isocyansäure zu Ammoniak und CO₂ die Aufbereitung des Harnstoffs zu Ammoniak unabhängig von den in der Abgasanlage herrschenden Betriebsbedingungen durchgeführt wird.

Durch die Auslagerung der Harnstoffaufbereitung zu Ammoniak aus der Abgasanlage und die direkte Dosierung von Ammoniak in das ANB-System kann die Temperaturschwelle für die Eindosierung des Reduktionsmittels auf deutlich unter 200 - 230°C, bevorzugt auf Temperaturen im Bereich von 120 - 180°C abgesenkt werden.

Die Limitierung der vorstehend genannten unteren Temperaturdosierschwelle liegt im Bereich des Arbeitstemperaturfensters des SCR-Katalysators. Durch die Eindosierung von gasförmigem Ammoniak besteht kein Risiko der Kristallisation von Harnstoff und Harnstoff-Folgeprodukten wie Isocyansäure, Cyanursäure oder Melamin, die aus dem unvollständigen Abbau von Harnstoff resultieren und zu einer vollständigen Verblockung der Abgasanlage bei zu geringen Betriebstemperaturen führen können. Weiterhin besteht bei diesem Verfahren keine Limitierung der Entstickungseffizienz durch unvollständige Harnstoffaufbereitung zu Ammoniak. Überdosierungen von Reduktionsmittel zur Kompensation einer unvollständigen Harnstoffaufbereitung in Niedriglastpunkten werden überflüssig. Eine Verkleinerung des ASC und/oder die vollständige Vermeidung der Ammoniaksekundäremission von (zulässigen) 10 Vppm im zeitlichen Mittel ohne ASC sind möglich.

Die Erfindung sowie das technische Umfeld werden nachfolgend anhand der Figuren erläutert. Es ist darauf hinzuweisen, dass die Erfindung nicht auf den Gegenstand der Figuren beschränkt ist. Es zeigt schematisch:
- Figur 1: eine bevorzugte Ausführungsvariante der Vorrichtung zur Durchführung des erfindungsgemäßen Verfahrens,
- Figur 2: das Kurbelgehäuse einer Brennkraftmaschine mit integriertem HWL-Wärmetauscher

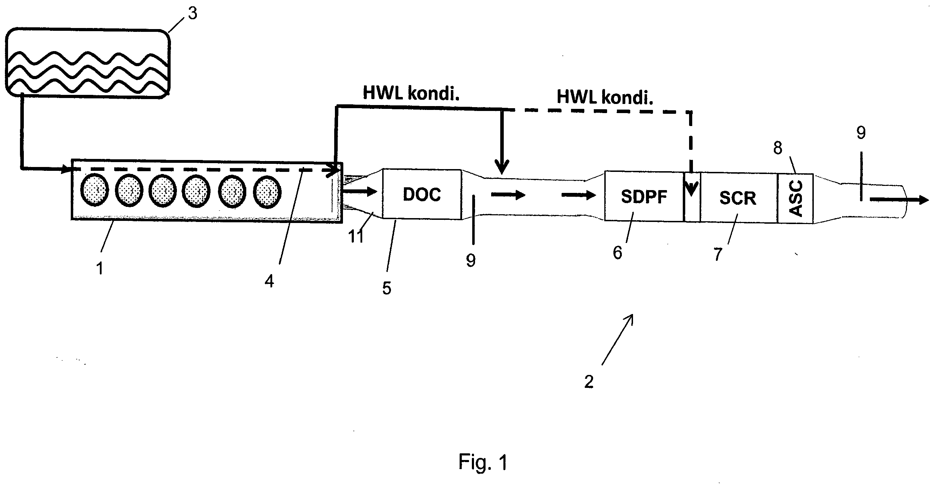

Figur 1 zeigt eine Brennkraftmaschine 1 mit einem Abgasstrang 2 und einem Harnstoff-Wasser-Lösungs-Tank 3. Im Abgasstrang 2 in Strömungsrichtung des Abgases ist zwischen DOC 5 und dem SDPF 6 ein NOₓ-Sensor 9 und eine HWL-Eintragsvorrichtung angeordnet, die von dem HWL-Wärmetauscher 14 gespeist wird. Der HWL-Wärmetauscher 14 kann auch die HVL-Eintragsvorrichtung zwischen SDPF 6 und dem SCR 7 mit HWL versorgen. In Strömungsrichtung des Abgases befindet sich ein Ammoniak-Schlupf-Katalysator (ASC) 8 hinter dem SCR 7. Am Ende des Abgasstrangs 2 ist ein NOₓ-Sensor 9 angeordnet. In einer alternativen, nicht erfindungsgemässen Ausgestaltung ist vorgesehen, dass der HWL-Wärmetauscher 14 im Wesentlichen in einem doppelwandigen Abgasrohr 11 angeordnet ist, das zwei NOₓ-Sensoren 9 aufweist, wobei der eine NOₓ-Sensor 9 zwischen DOC 5 und SDPF 6 und der andere hinter dem ASC 8 angeordnet ist.

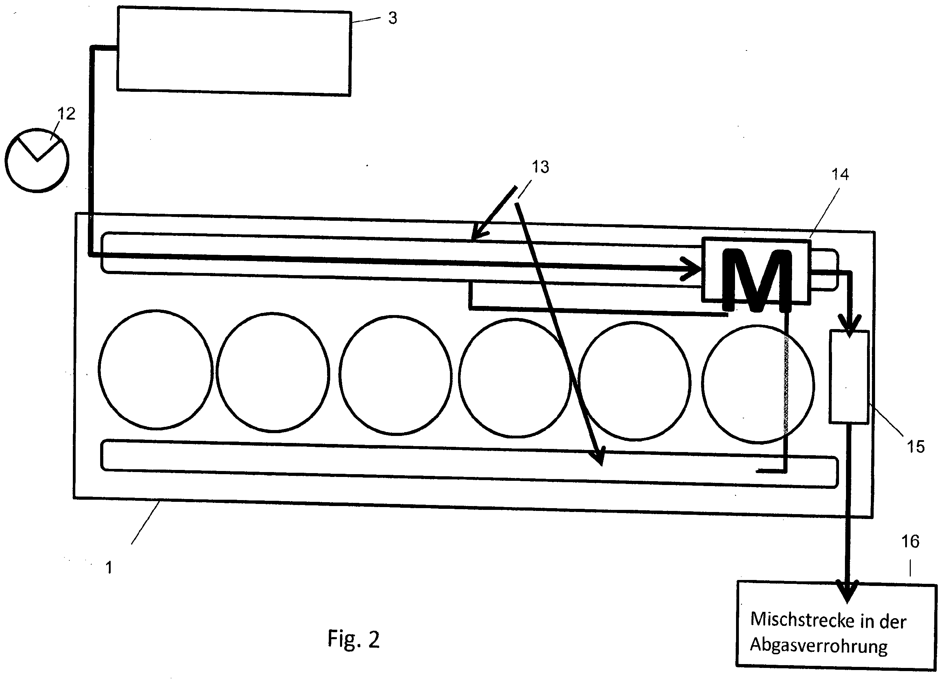

In Figur 2 wird ein Kurbelgehäuse einer Brennkraftmaschine 1 mit im Kühlkreislauf bzw. Wassermantel 13 integrierten HWL-Wärmetauscher 14 gezeigt. Die HWL befindet sich in dem im Bereich der Brennkraftmaschine angeordneten Harnstoff-Wasser-Lösungs-Tank 3. Die HWL wird mittels Flüssigharnförderpumpe 12 in den Bereich des Kühlwasser führenden Bereich des Kurbelgehäuses der Brennkraftmaschine 1 gefördert, in dem sich der HWL-Wärmetauscher 14 befindet und durch den die HWL erwärmt wird. In einer nicht dargestellten alternativen Ausgestaltung ist vorgesehen, dass der HWL-Wärmetauscher 14 im Zylinderkopf der Brennkraftmaschine 1 angeordnet ist. Die erwärmte HWL gelangt mittels der Flüssigharnförderpumpe 12 nach dem Verlassen des HWL-Wärmetauscher 14 in die Dosiereinrichtung 15. Nach dem die HWL die Dosiereinrichtung 15 verlassen hat, gelangt sie in die Mischstrecke in der Abgasverrohrung 16, in der sie weiter erwärmt wird.

Zwischen SCR-beschichtetem Partikelfilter und Ammoniakoxidationskatalysator kann bei Bedarf vorteilhafterweise weiteres SCR-Katalysatorvolumen integriert werden. In diesem Fall wird der ASC als abströmseitige Zone auf dem SCR-Katalysator aufgebracht. Durch (Teil-)Integration des SCR-Katalysatorvolumens in das Partikelfilter ist der vom Abgasnachbehandlungssystem insgesamt benötigte Bauraum noch immer deutlich geringer als der eines herkömmlichen Systems gemäß EP-B-1 054 766.

Die Eindosierung von vorkonditionierter HWL in den Abgasstrang ermöglicht nicht nur die Dosierung bei niedrigeren Abgastemperaturen als bei herkömmlichen Eindosierungsverfahren. Da zur Aufarbeitung der HWL zu Ammoniak weniger thermische Energie eingetragen werden muss als bei herkömmlichen Systemen, kann dieser Vorteil bei Nichtabsenkung der Temperaturdosierschwelle für eine Verkürzung der Mischstrecke ausgenutzt werden.

Systeme mit SCR-beschichtetem Filter, die im Stand der Technik vor allem in Pkw-Anwendungen beschrieben werden, werden typischerweise aktiv regeneriert, d. h. beispielsweise mittels Kraftstoffnacheinspritzung und exotherme Oxidation der resultierenden Kohlenwasserstoffe über einem dem Filter vorgelagerten Dieseloxidationskatalysator. Im erfindungsgemäßen Verfahren soll eine passive Regeneration des Partikelfilters erfolgen. Dazu sind hinreichende Mengen NO₂ im Abgas vor Partikelfilter nötig. Der vorgelagerte Oxidationskatalysator muss daher hohe NO-Oxidationsraten aufweisen, so dass ein NO₂/NOₓ-Verhältnis > 0,5 im Abgas vor SCR-beschichtetem Partikelfilter vorliegt. In diesem Fall kann davon ausgegangen werden, dass nur NO₂, das im Verhältnis 1:1 im Abgas vor dem SCR-beschichtetem Filter vorliegt, in der SCR-Reaktion ("fast SCR" unterschiedliche Reaktionsgeschwindigkeiten beachten!!) abreagiert. Darüber hinaus gehende Anteile an NO₂ stehen dem Rußabbrand nach CRT®-Effekt zur Verfügung.

Bei weniger optimalen Betriebstemperaturen kann in einer alternativen Ausgestaltung vorteilhafterweise eine zweite HWL-Dosierstelle zwischen dem SCR-beschichteten Partikelfilter und einem abströmseitigen SCR/ASC angeordnet werden. Um eine umfassende passive Regeneration zu gewährleisten, wird dann vor dem SCR-beschichteten Filter eine unterstöchiometrische Menge an Reduktionsmittel bereitgestellt. Die Restentstickung erfolgt nach einer zweiten HWL-Einspritzung im nachgeordneten SCR/ ASC-Katalysator.

Der Begriff selektive katalytische Reduktion (englisch selective catalytic reduction, SCR) bezeichnet eine Technik zur Reduktion von Stickoxiden in Abgasen von Feuerungsanlagen, Müllverbrennungsanlagen, Gasturbinen, Industrieanlagen und Motoren. Die chemische Reaktion am SCR-Katalysator ist selektiv, das heißt, es werden bevorzugt die Stickoxide (NO, NO₂) reduziert, während unerwünschte Nebenreaktionen (wie zum Beispiel die Oxidation von Schwefeldioxid zu Schwefeltrioxid) weitgehend unterdrückt werden.

Zum Ablauf der Reaktion wird Ammoniak (NH₃) benötigt, das aus dem Abgas zugemischter Harnstoffwasserlösung freigesetzt wird. Die Produkte der Reaktion sind Wasser (H₂O) und Stickstoff (N₂). Chemisch gesehen handelt es sich bei der Reaktion um eine Komproportionierung der Stickoxide mit Ammoniak zu Stickstoff. Es gibt verschiedene Arten von Katalysatoren. Eine Art besteht im Wesentlichen aus Titandioxid, Vanadiumpentoxid und Wolframdioxid. Eine andere Art verwendet Zeolithe.

Das erfindungsgemäße Verfahren sieht die Integration mindestens eines Teils des SCR-Katalysatorvolumens in das Partikelfiltervolumen durch Einsatz eines SCR-katalytisch aktivierten Partikelfilters vor.

In der Fahrzeugtechnik wird das SCR-Verfahren angewendet, um bei Dieselfahrzeugen die Stickoxidemissionen zu senken. Mit Hilfe dieser Technik können Nutzfahrzeuge die Euro-V-Norm, Landmaschinen die Tier 3b Norm und PKW die sehr strenge amerikanische BIN5 Abgasnorm sowie die Euro-6-Norm erfüllen. Auch zur Erfüllung der Abgasnormen US Tier 4 final und EU Stufe IV wird diese Technologie eingesetzt.

Das für die SCR-Reaktion benötigte Ammoniak wird nicht direkt, d. h. in reiner Form, verwendet, sondern in der Abgasanlage aus einer 32,5-prozentigen, wässrigen Harnstofflösung erzeugt. Die Zusammensetzung der HWL ist in der DIN 70070 geregelt. Diese wässrige Lösung wird vor dem SCR-Katalysator in den Abgasstrang, z. B. mittels Dosierpumpe oder Injektor, eingespritzt. Aus der Harnstoffwasserlösung entstehen durch Thermolyse und eine Hydrolysereaktion Ammoniak und CO₂. Das so erzeugte Ammoniak kann in einem speziellen SCR-Katalysator bei entsprechender Temperatur mit den Stickoxiden im Abgas reagieren. Die Menge des eingespritzten Harnstoffs ist von der motorischen Stickoxidemission und damit von der momentanen Drehzahl und dem Drehmoment des Motors abhängig. Der Verbrauch an Harnstoffwasserlösung beträgt abhängig von der Rohemission des Motors etwa 2 bis 8 % der Menge des eingesetzten Dieselkraftstoffs. Es muss deshalb ein entsprechendes Tankvolumen mitgeführt werden. Zur Erzielung hoher NOₓ-Minderungsraten ist es wichtig, dass die Harnstoffwasserlösung (AdBlue®) im richtigen Verhältnis zur Stickoxidemission des Motors dosiert wird. Da SCR-Katalysatoren bis zu einer gewissen Grenze NH₃ speichern können, muss die Dosierung im Mittel der NOₓ-Emission entsprechen. Ist die Dosierung zu gering, so sinkt der Wirkungsgrad der Stickoxidminderung, wird zu viel Harnstoff zudosiert, so kann das daraus gebildete Ammoniak nicht mit NOₓ reagieren und in die Umgebung gelangen. Da Ammoniak einen stechenden Geruch hat und bereits in sehr kleinen Konzentrationen wahrgenommen werden kann, würde dies bei einer Überdosierung zu einer Geruchsbelästigung in der Nähe des Fahrzeugs führen. Abhilfe schafft man, indem hinter dem SCR-Katalysator ein Oxidationskatalysator eingebaut wird. Dieser wandelt im Falle einer Ammoniak-Überdosierung das NH₃ wieder in Stickstoff und Wasser um. Eine weitere Möglichkeit, den sogenannten Ammoniak-Schlupf zu verhindern, ist eine größere Auslegung des Katalysators, um damit eine gewisse Speicherfunktion zu erhalten.

Die Thermolyse ist eine chemische Reaktion, bei der ein Ausgangsstoff durch Erhitzen in mehrere Produkte zersetzt wird. Im Gegensatz zur thermischen Zersetzung (=Pyrolyse) wird die Thermolyse gezielt zur Darstellung definierter Produkte oder reaktiver Zwischenstufen eingesetzt.

Die Hydrolyse ist die Spaltung von chemischen Verbindungen mit Wasser. Allgemein gilt:
Thermolyse von Harnstoff:

   (NH₂)₂CO → NH₃ + HNCO

   (Isocyansäure)
Hydrolyse der resultierenden Isocyansäure:

   HNCO + H₂O → NH₃ + CO₂
Reduktion der Stickoxide:

   4 NH₃ + 4 NO + O₂ → 4 N₂ + 6 H₂O

   ("Standard SCR")

   2 NH₃ + NO + NO₂ → 2 N₂ + 3 H₂O

   ("Fast SCR")

   4 NH₃ + 3 NO₂ → 3,5 N₂ + 6 H₂O

   ("Slow SCR")

Die Stickoxidminderung erfolgt ohne Änderung der motorischen Verbrennung und erhält damit den sehr guten Wirkungsgrad von Dieselmotoren.

### Abkürzungsverzeichnis:

- AdBlue: 32,5 %ige wässrige Harnstofflösung
- ANB: Abgasnachbehandlung
- ASC: Ammoniak Slip Katalysator
- CRT: Continuously Regeneration Trap
- CSF: Partikelfilter mit einer Beschichtung zur Oxidation von Abgaskomponenten
- DOC: Dieseloxidationskatalysator
- DPF: Dieselpartikelfilter
- NH3: Ammoniak
- NOx: Summe der bei der motorischen Verbrennung entstehenden Stickoxide (NO, NO₂, N₂O etc.)
- RG: Reaktionsgeschwindigkeit
- SCR: Selektive katalytische Reduktion
- SDPF: Dieselpartikelfilter mit einer SCR-aktiven Beschichtung

### Bezugszeichen

- 1: Brennkraftmaschine
- 2: Abgasstrang
- 3: Harnstoff-Wasser-Lösungs-Tank
- 5: DOC
- 6: SDPF
- 7: SCR
- 8: ASC
- 9: NOx-Sensor
- 10: Zylinderkopf
- 11: doppelwandiges Abgasrohr
- 12: Flüssigharnförderpumpe
- 13: Wassermantel im Kurbelgehäuse
- 14: Wärmetauscher, Spiral-, Rohrbündelwärmetauscher
- 15: Dosiereinrichtung
- 16: Mischstrecke

## Patentansprüche

1. Verfahren zur Reinigung von Dieselmotorenabgasen mit den folgenden Verfahrensschritten:
a. Durchleiten des zu reinigenden Abgases durch einen Dieseloxidationskatalysator (DOC) zur Oxidation von gasförmigen Restkohlenwasserstoffen (HC) und von Kohlenstoffmonoxid (CO) zu Kohlenstoffdioxid (CO₂) und zur mindestens anteiligen Oxidation von im Abgas enthaltenen Stickstoffmonoxid (NO) zu Stickstoffdioxid (NO₂);
b. Zugabe von am Motor vorkonditionierten, d. h. auf 80 - 90 °C erwärmten Harnstoffwasserlösung (HWL) zum aus Schritt a.) resultierenden Abgas und Freisetzung von Ammoniak aus dem zugegebenen Harnstoff durch Thermolyse und Hydrolyse;
c. Durchleiten des aus Schritt b.) resultierenden Abgases durch ein SCR-katalytisch aktiviertes Partikelfilter (SDPF) zur Verminderung der im Abgas enthaltenen Partikel und der im Abgas enthaltenen Stickoxide;
d. Durchleiten des aus Schritt c.) resultierenden Abgases durch einen selektiven Ammoniakoxidationskatalysator (ASC) zur Verminderung von Ammoniakrestgehalten,
wobei sich die HWL in einem im Bereich der Brennkraftmaschine angeordneten HWL-Tank (3) befindet und sich durch einen Wärmetauscher (14) erwärmt der in das Kurbelgehäuse oder in den Zylinderkopf der Brennkraftmaschine integriert ist, und wobei die HWL mittels Flüssigförderpumpe (12) in den Bereich des Kühlwasser führenden Bereichs des Kurbelgehäuses bzw. des Zylinderkopfes gefördert und durch den Wärmetauscher (14) erwärmt wird.

2. Verfahren nach Anspruch 1,
**dadurch gekennzeichnet, dass** das aus Schritt c.) resultierende Abgas vor Durchleiten durch den selektiven Ammoniakoxidationskatalysator (ASC) in Schritt d.) zunächst durch einen zwischen SCR-katalytisch aktiviertem Partikelfilter und ASC angeordneten, zusätzlichen SCR-Katalysator geleitet wird.

3. Verfahren nach Anspruch 1,
**dadurch gekennzeichnet, dass** der Anteil an in Schritt a.) erzeugtem NO₂ im NOₓ im aus Schritt a.) resultierenden Abgas mehr als 50 % beträgt.

4. Verfahren nach einem der Ansprüche 1 oder 2,
**dadurch gekennzeichnet, dass** das SCR-katalytisch aktivierte Partikelfilter (SDPF) mit einem passiven Regenerationskonzept betrieben wird.

5. Verfahren nach Anspruch 4,
**dadurch gekennzeichnet, dass** die Oxidation der im SDPF eingelagerten Rußpartikel mindestens anteilig mit NO₂ erfolgt, das in Schritt a.) erzeugt wurde.

6. Verfahren nach Anspruch 2,
**dadurch gekennzeichnet, dass** zwischen dem SCR-katalytisch aktivierten Partikelfilter und dem nachgeordneten, zusätzlichen SCR-Katalysator eine zweite Dosierstelle ist, mittels derer vorkonditionierte, d. h. auf 80 - 90°C erwärmte Harnstoffwasserlösung (HWL) dem aus Schritt c.) resultierenden Abgas zugeführt wird.

7. Verfahren nach Anspruch 6,
**dadurch gekennzeichnet, dass** die Entstickungseffizienz des SCR-katalytisch aktivierten Partikelfilters durch Begrenzung der in Schritt b.) zugeführten Menge an Harnstoffwasserlösung limitiert wird.

## Claims

1. Method for purifying diesel engine exhaust gases having the following method steps:
a. passing the exhaust gas to be purified through a diesel oxidation catalyst (DOC) for oxidizing gaseous residual hydrocarbons (HC) and carbon monoxide (CO) to carbon dioxide (CO₂) and for oxidizing at least a proportion of the nitrogen monoxide (NO) contained in the exhaust gas to nitrogen dioxide (NO₂);
b. addition of aqueous urea solution (AUS) preconditioned at the engine, i.e. heated to 80 - 90°C, to the exhaust gas resulting from step a.) and liberation of ammonia from the urea added by thermolysis and hydrolysis;
c. passing the exhaust gas resulting from step b.) through a particulate filter activated for SCR catalysis (SDPF) in order to reduce the level of the particulates contained in the exhaust gas and the nitrogen oxides contained in the exhaust gas;
d. passing the exhaust gas resulting from step c.) through a selective ammonia oxidation catalyst (ASC) in order to reduce residual ammonia contents, wherein the AUS is situated in an AUS tank (3) arranged in the region of the internal combustion engine and is heated by means of a heat exchanger (14) which is integrated into the crankcase or into the cylinder head of the internal combustion engine, and wherein the AUS is conveyed by means of a liquid delivery pump (12) into the region of the cooling-water-carrying region of the crankcase or of the cylinder head and is heated by means of the heat exchanger (14).

2. Method according to Claim 1,
**characterized in that**, before being passed through the selective ammonia oxidation catalyst (ASC) in step d.), the exhaust gas resulting from step c.) is first of all passed through an additional SCR catalyst arranged between the particulate filter activated for SCR catalysis and the ASC.

3. Method according to Claim 1,
**characterized in that** the proportion of NO₂, produced in step a.), in the NOₓ in the exhaust gas resulting from step a.) amounts to more than 50%.

4. Method according to either of Claims 1 or 2, **characterized in that** the particulate filter activated for SCR catalysis (SDPF) is operated by means of a passive regeneration concept.

5. Method according to Claim 4,
**characterized in that** the oxidation of the soot particles deposited in the SDPF takes place at least partially with NO₂ produced in step a.).

6. Method according to Claim 2,
**characterized in that** there is a second metering location, by means of which preconditioned aqueous urea solution (AUS), i.e. aqueous urea solution heated to 80 - 90°C, is added to the exhaust gas resulting from step c.) between the particulate filter activated for SCR catalysis and the downstream additional SCR catalyst.

7. Method according to Claim 6,
**characterized in that** the efficiency of nitrogen oxide removal by the particulate filter activated for SCR catalysis is limited by limiting the quantity of aqueous urea solution added in step b.).

## Revendications

1. Procédé de nettoyage de gaz d'échappement de moteurs Diesel, comprenant les étapes suivantes:
a. conduire les gaz d'échappement à nettoyer à travers un catalyseur d'oxydation Diesel (DOC) pour l'oxydation de résidus d'hydrocarbures gazeux (HC) et de monoxyde de carbone (CO) en dioxyde de carbone (CO₂) et pour l'oxydation au moins partielle du monoxyde d'azote (NO) contenu dans les gaz d'échappement en dioxyde d'azote (NO₂);
b. ajouter une solution aqueuse d'urée (HWL) préconditionnée sur le moteur, c'est-à-dire chauffée à 80 - 90°C, aux gaz d'échappement résultant de l'étape a. et libération d'ammoniac à partir de l'urée ajoutée par thermolyse ou hydrolyse;
c. conduire les gaz d'échappement résultant de l'étape b. à travers un filtre à particules à activation catalytique SCR (SDPF) pour diminuer les particules contenues dans les gaz d'échappement et les oxydes d'azote contenus dans les gaz d'échappement;
d. conduire les gaz d'échappement résultant de l'étape
c. à travers un catalyseur d'oxydation d'ammoniac sélectif (ASC) pour diminuer les teneurs résiduelles en ammoniac,
dans lequel la HWL se trouve dans un réservoir de HWL disposé dans la région du moteur à combustion interne et s'échauffe au moyen d'un échangeur de chaleur (14) qui est intégré dans le carter de vilebrequin ou dans la culasse du moteur à combustion interne, et dans lequel la HWL est transportée au moyen d'une pompe de transport de liquide (12) dans la région de la région du carter de vilebrequin ou de la culasse transportant de l'eau de refroidissement et est chauffée par l'échangeur de chaleur (14).

2. Procédé selon la revendication 1, **caractérisé en ce que** l'on conduit les gaz d'échappement résultant de l'étape c., avant de les conduire à travers le catalyseur d'oxydation d'ammoniac sélectif (ASC) dans l'étape d., d'abord à travers un catalyseur SCR supplémentaire disposé entre le filtre à particules à activation catalytique SCR et l'ASC.

3. Procédé selon la revendication 1, **caractérisé en ce que** la part de NO₂ produit à l'étape a. dans les NOₓ dans les gaz d'échappement résultant de l'étape a. vaut plus de 50 %.

4. Procédé selon une des revendications 1 ou 2, **caractérisé en ce que** le filtre à particules à activation catalytique SCR (SDPF) fonctionne suivant un concept de régénération passive.

5. Procédé selon la revendication 4, **caractérisé en ce que** l'on effectue l'oxydation des particules de suie déposées dans le SDPF au moins en partie avec du NO₂, qui a été produit à l'étape a.

6. Procédé selon la revendication 2, **caractérisé en ce qu'**un second point de dosage est situé entre le filtre à particules à activation catalytique SCR et le catalyseur SCR qui suit, au moyen duquel une solution aqueuse d'urée (HWL) préconditionnée, c'est-à-dire chauffée à 80 - 90°C, est ajoutée aux gaz d'échappement résultant de l'étape c.

7. Procédé selon la revendication 6, **caractérisé en ce que** l'efficacité de dénitrification du filtre à particules à activation catalytique SCR est limitée par la limitation de la quantité de solution aqueuse d'urée ajoutée à l'étape b.
